# EUROPÄISCHE PATENTANMELDUNG

(11) **EP 2 116 860 A2**
(43) Veröffentlichungstag der Anmeldung: **11.11.2009**
(21) Anmeldenummer: 09006061.7
(22) Anmeldetag: 04.05.2009
(51) Int. Cl.: G01S 1/00

(54) **Satellitenempfängerschaltkreis**

(30) Priorität: 04.05.2008 DE 102008022032
(71) Anmelder: Atmel Automotive GmbH, 74072 Heilbronn (DE)
(72) Erfinder: Golberg, Hans-Joachim, Dipl.-Ing., 89079 Ulm (DE)
(74) Vertreter: Müller, Wolf-Christian

(57) **Zusammenfassung**

Satellitenempfängerschaltkreis zum Empfang von Satellitennavigationssignalen unterschiedlicher Satellitensysteme,
- mit einer Oszillatorschaltung (100) mit einer Teilervorrichtung zur Erzeugung eines ersten Oszillatorsignals aus einem Referenzsignal durch einen ersten Teilerfaktor und zur Erzeugung eines zweiten Oszillatorsignals aus dem Referenzsignal durch einen zweiten Teilerfaktor,
- mit einer ersten analogen Eingangsschaltung (200), die zum Heruntermischen von zumindest einem ersten Empfangssignal mit einem ersten Frequenzband auf ein erstes Zwischenfrequenzsignal und zum Heruntermischen von zumindest einem zweiten Empfangssignal mit einem zweiten Frequenzband, das dem Spiegelfrequenzband des ersten Frequenzbands entspricht, auf ein zweites Zwischenfrequenzsignal mittels des ersten Oszillatorsignals ausgebildet ist,
- mit einer zweiten analogen Eingangsschaltung (300), die zum Heruntermischen von zumindest einem dritten Empfangssignal mit einem dritten Frequenzband auf ein drittes Zwischenfrequenzsignal und zum Heruntermischen von zumindest einem vierten Empfangssignal mit einem vierten Frequenzband, das dem Spiegelfrequenzband des dritten Frequenzbands entspricht, auf ein viertes Zwischenfrequenzsignal mittels des zweiten Oszillatorsignals ausgebildet ist,
- bei dem der erste Teilerfaktor und der zweite Teilerfaktor derart bemessen sind, dass Frequenzbereiche des zweiten Zwischenfrequenzsignals und des dritten Zwischenfrequenzsignal und des vierten Zwischenfrequenzsignals sich zur Auswertung zumindest teilweise überlappen.

## Beschreibung

Die vorliegende Erfindung betrifft das Gebiet des Empfangs von Satellitennavigationssignalen.

Derzeit sind unterschiedliche Satellitensysteme für Satellitennavigationssignale im Einsatz. Beispielsweise wird GLONASS (Globales Navigations-Satelliten-System) in einem Frequenzband von 1601,5 MHz verwendet. Ein anderes System ist GPS (engl.: Global Positioning System), das auch als NAVSTAR-GPS bezeichnet wird. Das GPS sendet beispielsweise auf den Frequenzbändern L1 mit 1575,42 MHz und L5 mit 1176,45 MHz. Ein weiteres System ist Galileo, das die Frequenzbänder E1 mit 1575,42 MHz und zudem E5a mit 1176,45 MHz und E5b mit 1207,14 MHz nutzt.

Der Erfindung liegt die Aufgabe zu Grunde einen Satellitenempfängerschaltkreis möglichst zu verbessern.

Diese Aufgabe wird durch einen Satellitenempfängerschaltkreis mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Satellitenempfängerschaltkreis zum Empfang von Satellitennavigationssignalen unterschiedlicher Satellitensysteme vorgesehen.

Der Satellitenempfängerschaltkreis weist eine Oszillatorschaltung mit einer Teilervorrichtung zur Erzeugung eines ersten Oszillatorsignals aus vorzugsweise genau einem Referenzsignal durch einen ersten Teilerfaktor und zur Erzeugung eines zweiten Oszillatorsignals aus dem Referenzsignal durch einen zweiten Teilerfaktor auf.

Der Satellitenempfängerschaltkreis weist eine erste analoge Eingangsschaltung auf, die zum Heruntermischen von zumindest einem ersten Empfangssignal und zum Heruntermischen von zumindest einem zweiten Empfangssignal ausgebildet ist. Dabei können auch mehrere erste Empfangssignale und/oder mehrere zweite Empfangssignale vorgesehen sein.

Die erste analoge Eingangsschaltung ist ausgebildet ein erstes Empfangssignal mit einem ersten Frequenzband auf ein erstes Zwischenfrequenzsignal herunter zu mischen. Das erste Empfangssignal wird von einer Anzahl Satelliten im ersten Frequenzband gesendet. Die erste analoge Eingangsschaltung ist ausgebildet ein zweites Empfangssignal mit einem zweiten Frequenzband auf ein zweites Zwischenfrequenzsignal herunter zu mischen. Das zweite Empfangssignal wird von einer Anzahl Satelliten im zweiten Frequenzband gesendet. Die erste analoge Eingangsschaltung ist zum Heruntermischen mittels des ersten Oszillatorsignals ausgebildet. Das zweite Frequenzband entspricht dem Spiegelfrequenzband des ersten Frequenzbands bezogen auf eine Frequenz des ersten Oszillatorsignals.

Der Satellitenempfängerschaltkreis weist eine zweite analoge Eingangsschaltung auf, die zum Heruntermischen von zumindest einem dritten Empfangssignal und zum Heruntermischen von zumindest einem vierten Empfangssignal ausgebildet ist. Dabei können auch mehrere dritte Empfangssignale und/oder mehrere vierte Empfangssignale vorgesehen sein.

Die zweite analoge Eingangsschaltung ist ausgebildet ein drittes Empfangssignal mit einem dritten Frequenzband auf ein drittes Zwischenfrequenzsignal herunter zu mischen. Das dritte Empfangssignal wird von einer Anzahl Satelliten im dritten Frequenzband gesendet. Die zweite analoge Eingangsschaltung ist ausgebildet ein viertes Empfangssignal mit einem vierten Frequenzband auf ein viertes Zwischenfrequenzsignal herunter zu mischen. Das vierte Empfangssignal wird von einer Anzahl Satelliten im vierten Frequenzband gesendet. Die zweite analoge Eingangsschaltung ist zum Heruntermischen mittels des zweiten Oszillatorsignals ausgebildet. Das vierte Frequenzband entspricht dem Spiegelfrequenzband des dritten Frequenzbands bezogen auf eine Frequenz des zweiten Oszillatorsignals.

Der erste Teilerfaktor und der zweite Teilerfaktor sind derart bemessen, dass Frequenzbereiche des zweiten Zwischenfrequenzsignals und des dritten Zwischenfrequenzsignal und des vierten Zwischenfrequenzsignals sich zur Auswertung zumindest teilweise - bevorzugt überwiegend - überlappen. Vorzugsweise sind die Frequenzbereiche der Zwischenfrequenzsignale von den Bandbreiten der Frequenzbänder der Empfangssignale abhängig. Ebenfalls ist es möglich, dass auch der Frequenzbereich des ersten Zwischenfrequenzsignals eine Überlappung mit den anderen Frequenzbereichen des zweiten, dritten oder vierten Zwischenfrequenzsignals aufweist.

Der Erfindung liegt weiterhin die Aufgabe zu Grunde ein möglichst verbessertes Verfahren zum Empfang anzugeben.

Diese Aufgabe wird durch das Verfahren mit den Merkmalen des unabhängigen Anspruchs 12 gelöst. Vorteilhafte Weiterbildungen sind Gegenstand von abhängigen Ansprüchen und in der Beschreibung enthalten.

Demzufolge ist ein Verfahren zum Empfang von Satellitennavigationssignalen vorgesehen. In dem Verfahren aus einem Referenzsignal ein erstes Oszillatorsignal mittels eines ersten Teilerfaktors und ein zweites Oszillatorsignal mittels eines zweiten Teilerfaktors erzeugt.

Ein erstes in einem ersten Frequenzband empfangenes Empfangssignal wird auf ein erstes Zwischenfrequenzsignal heruntergemischt. Ein zweites in einem zweiten Frequenzband empfangenes Empfangssignal wird auf ein zweites Zwischenfrequenzsignal heruntergemischt, wobei das zweite Frequenzband dem Spiegelfrequenzband des ersten Frequenzbands entspricht.

Ein drittes in einem dritten Frequenzband empfangenes Empfangssignal wird auf ein drittes Zwischenfrequenzsignal heruntergemischt. Ein viertes in einem zweiten Frequenzband empfangenes Empfangssignal wird auf ein viertes Zwischenfrequenzsignal heruntergemischt, wobei das vierte Frequenzband dem Spiegelfrequenzband des dritten Frequenzbands entspricht.

Der erste Teilerfaktor und der zweite Teilerfaktor werden derart eingestellt, dass Frequenzbereiche des zweiten Zwischenfrequenzsignals und des dritten Zwischenfrequenzsignals und des vierten Zwischenfrequenzsignals sich zur Auswertung zumindest teilweise überlappen.

Der Erfindung liegt weiterhin die Aufgabe zu Grunde eine Verwendung anzugeben.

Diese Aufgabe wird durch eine Verwendung mit den Merkmalen des unabhängigen Anspruchs 13 gelöst. Vorteilhafte Weiterbildungen sind Gegenstand von abhängigen Ansprüchen und in der Beschreibung angegeben.

Demzufolge ist eine Verwendung einer Oszillatorvorrichtung mit ganzzahligen Teilerfaktoren zur Teilung eines Referenzsignals zur Erzeugung eines ersten Oszillatorsignals für einen ersten Mischer und eines zweiten Oszillatorsignals für einen zweiten Mischer zum Heruntermischen von Satellitennavigationssignalen von auf unterschiedlichen Frequenzen sendenden Satelliten unterschiedlicher Satellitennavigationssysteme vorgesehen.

Die im Folgenden beschriebenen Weiterbildungen beziehen sich sowohl auf den Satellitenempfängerschaltkreis, als auch auf die Verwendung als auch auf das Verfahren zum Empfang.

Gemäß einer besonders bevorzugten Weiterbildung ist vorgesehen, dass die Teilervorrichtung eine Anzahl von ausschließlich ganzzahligen Teilern aufweist. Ganzzahlige Teiler weisen dabei einen Teilerfaktor von m auf, wobei m vorzugsweise eine natürliche Zahl größer Eins ist (2, 3, 4, 5 usw.).

In einer anderen vorteilhaften Weiterbildung ist vorgesehen, dass die Oszillatorvorrichtung eine Phasenregelschleife (PLL engl. Phase Locked Loop) mit einem ersten Teiler der Teilervorrichtung aufweist. Bevorzugt weist die Oszillatorvorrichtung einen zweiten Teiler der Teilervorrichtung auf, der mit dem Ausgang der Phasenregelschleife und der ersten analogen Eingangsschaltung verbunden ist. Besonders bevorzugt weist die Oszillatorvorrichtung einen dritten Teiler der Teilervorrichtung auf, der mit dem Ausgang der Phasenregelschleife und der zweiten analogen Eingangsschaltung verbunden ist.

Gemäß einer vorteilhaften Ausgestaltungsvariante ist der erste Teiler zur Teilung durch zweiundzwanzig oder einem ganzzahligem Vielfachen von zweiundzwanzig ausgebildet. Vorzugsweise ist der erste Teiler zur Teilung durch ein 2ⁿ-faches von zweiundzwanzig mit n als Element der natürlichen Zahlen - ausgebildet.

Vorzugsweise ist der zweite Teiler zur Teilung durch drei ausgebildet. Vorzugsweise ist der dritte Teiler zur Teilung durch vier ausgebildet.

Gemäß einer bevorzugten Ausgestaltungsvariante weist das Referenzsignal eine Referenzfrequenz in einem Bereich von 53,95 MHz bis 54,254 MHz - insbesondere eine Referenzfrequenz von 54,1725 MHz - auf. Vorzugsweise weist das Referenzsignal eine Referenzfrequenz von einem ganzzahligen Vielfachen von 53,95 MHz bis 54,254 MHz - vorzugsweise einem 2ⁿ-fachen von 53,95 MHz bis 54,254 MHz mit n als Element der natürlichen Zahlen - auf.

In einer vorteilhaften Weiterbildungsvariante ist vorgesehen, dass eine Referenzfrequenz des Referenzsignals und/oder der erste Teilerfaktor und der zweite Teiferfaktor derart ausgebildet sind, dass das erste Empfangssignal, das zweite Empfangssignal, das dritte Empfangssignal und das vierte Empfangssignal zwischen den Oberwellen des Referenzsignals liegen. Vorzugsweise sind das erste Empfangssignal, das zweite Empfangssignal, das dritte Empfangssignal und das vierte Empfangssignal zwischen sämtlichen Oberwellen von auftretenden Oszillationen der Oszillatorvorrichtung.

Weiter ausgestaltend ist vorgesehen, dass die erste Eingangsschaltung einen ersten analogen Mischer aufweist, der mit einem Ausgang der Oszillatorschaltung, insbesondere mit dem Ausgang des zweiten Teilers, verbunden ist. Vorzugsweise weist die zweite Eingangsschaltung einen zweiten analogen Mischer auf, der mit einem Ausgang der Oszillatorschaltung, insbesondere mit dem Ausgang des dritten Teilers, verbunden ist. Vorzugsweise ist der erste Mischer ein Bestandteil eines ersten Image-Rejection-Mischers, Vorzugsweise ist der zweite Mischer ein Bestandteil eines zweiten Image-Rejection-Mischers.

Gemäß einer besonders bevorzugten Weiterbildung weist der Satellitenempfängerschaltkreis einen ersten Analog-Digital-Umsetzer auf, der einem das erste Zwischenfrequenzsignal ausgebenden Ausgang eines ersten analogen, insbesondere komplexen Filters der ersten analogen Eingangsschaltung nachgeschaltet ist. Dabei können zwischen dem ersten analogen Filter und dem ersten Analog-Digital-Umsetzer noch weitere Schaltungsteile, wie beispielsweise ein Bandpassfilter oder ein Verstärker geschaltet sein, die ebenfalls dem ersten analogen Filter nachgeschaltet sind. Der erste analoge Filter ist vorzugsweise ein Polyphasenfilter.

Bevorzugt weist der Satellitenempfängerschaltkreis einen zweiten Analog-Digital-Umsetzer auf, der einem Umschalter nachgeschaltet ist. Eingänge des Umschalters sind mit einem Ausgang des ersten analogen Filters der ersten analogen Eingangsschaltung zur Ausgabe des zweiten Zwischenfrequenzsignals als heruntergemischtes Spiegelfrequenzsignal zum ersten Empfangssignal und/oder mit einem Ausgang eines zweiten analogen Filters der zweiten analogen Eingangsschaltung zur Ausgabe des dritten Zwischenfrequenzsignals und/oder mit einem Ausgang des zweiten analogen Filters der zweiten analogen Eingangsschaltung zur Ausgabe des vierten Zwischenfrequenzsignals als heruntergemischtes Spiegelfrequenzsignal zum dritten Empfangssignal verbunden. Der Schalter ist beispielsweise ein Analog-Multiplexer zur Umschaltung von Analogsignalen. Der zweite analoge Filter ist vorteilhafterweise ein komplexes Filter, bevorzugt ein Polyphasenfilter.

Bevorzugt ist vorgesehen, dass die erste analoge Eingangsschaltung und die zweite analoge Eingangsschaltung und der erste Analog-Digital-Umsetzer und der zweite Analog-Digital-Umsetzer zur gleichzeitigen Auswertung zumindest zweier Signale ausgebildet und eingerichtet sind. Gleichzeitig ausgewertet werden das erste Zwischenfrequenzsignal zusammen mit einem mittels des Schalters ausgewählten Signals aus dem zweiten Zwischenfrequenzsignal oder dem dritten Zwischenfrequenzsignal oder dem vierten Zwischenfrequenzsignal.

In einer anderen vorteilhaften Weiterbildung weist der Satellitenempfängerschaltkreis einen einstellbaren Bandpassfilter auf, der zwischen dem Schalter und dem zweiten Analog-Digital-Umsetzer geschaltet ist. Vorzugsweise weist der Satellitenempfängerschaltkreis eine Steuereinrichtung auf, die zum Einstellen der Transferfunktion des Bandpassfilters - insbesondere in Abhängigkeit von einer Schalterstellung des Schalters - ausgebildet ist.

Gemäß einer vorteilhaften Weiterbildung ist der Satellitenempfängerschaltkreis ausgebildet zur Auswertung das erste Empfangssignal und/oder das zweite Empfangssignal und/oder das dritte Empfangssignal und/oder das vierte Empfangssignal mittels eines Spreizkodes (CDMA) zu dekodieren.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Verfahrensmerkmale ergeben sich dabei aus Funktionen des Satellitenempfängerschaltkreises. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: einen schematischen Blockschaltplan eines Empfängers,
- Fig. 2: einen schematischen Blockschaltplan eines Empfängers,
- Fig. 3: einen schematischen Blockschaltplan einer Oszillatorvorrichtung,
- Fig. 4: einen schematischen Blockschaltplan eines komplexen Filters, und
- Fig. 5: ein schematisches Diagramm mit Frequenzbändern.

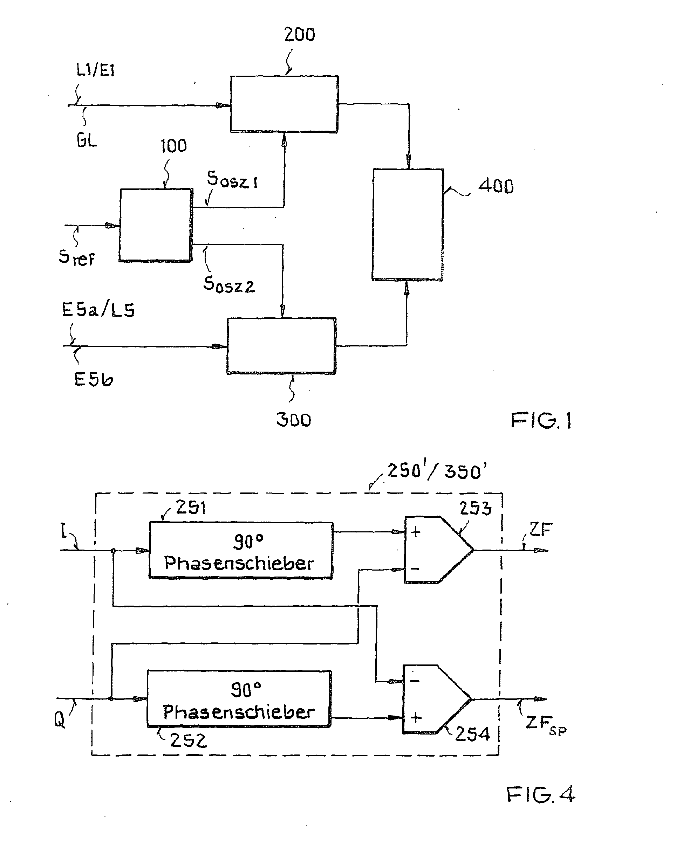

In Fig. 1 ist ein Satellitenempfängerschaltkreis zum Empfang von Satellitennavigationssignalen L1, E1, GL, E5a, L5, E5b unterschiedlicher Satellitensysteme (GLONASS, GPS, Galileo) als Blockschaltplan schematisch dargestellt. Der Satellitenempfängerschaltkreis weist eine Oszillatorschaltung 100 zur Erzeugung eines ersten Oszillatorsignals s_{OSZ1} aus einem Referenzsignal s_{ref} und zur Erzeugung eines zweiten Oszillatorsignals s_{OSZ2} aus dem Referenzsignal s_{ref} auf.

Weiterhin weist der Satellitenempfängerschaltkreis eine erste analoge Eingangsschaltung 200 und eine zweite analoge Eingangsschaltung 300 auf. Die erste analoge Eingangsschaltung 200 ist ausgebildet zumindest ein erstes Empfangssignal L1/E1 des Systems Galileo oder des Systems GPS, das in einem ersten Frequenzband gesendet wird und durch die erste analoge Eingangsschaltung 200 empfangbar ist, auf ein erstes Zwischenfrequenzsignal herunterzumischen. Weiterhin ist die erste analoge Eingangsschaltung 200 ausgebildet zumindest ein zweites Empfangssignal GL des Systems GLONASS, das in einem zweiten Frequenzband gesendet wird und durch die erste analoge Eingangsschaltung 200 empfangbar ist, auf ein zweites Zwischenfrequenzsignal herunter zu mischen. Dabei entspricht das zweite Frequenzband dem Spiegelfrequenzband des ersten Frequenzbands. Das Heruntermischen der Signale L1/E1 und GL erfolgt dabei mittels des ersten Oszillatorsignals s_{OSZ1}. Hierzu ist ein Ausgang der Oszillatorvorrichtung 100 mit einem Eingang der ersten analogen Eingangsschaltung 200 verbunden.

Die zweite analoge Eingangsschaltung 300 ist ausgebildet zumindest ein drittes Empfangssignal E5a/L5 des Systems Galileo oder des Systems GPS, das in einem dritten Frequenzband gesendet wird und durch die zweite analoge Eingangsschaltung 300 empfangbar ist, auf ein drittes Zwischenfrequenzsignal herunterzumischen. Weiterhin ist die zweite analoge Eingangsschaltung 300 ausgebildet zumindest ein viertes Empfangssignal E5b des Systems Galileo das in einem vierten Frequenzband gesendet wird und durch die zweite analoge Eingangsschaltung 300 empfangbar ist, auf ein viertes Zwischenfrequenzsignal herunter zu mischen. Dabei entspricht das vierte Frequenzband dem Spiegelfrequenzband des dritten Frequenzbands. Das Heruntermischen der Signale E5a/L5 und E5b erfolgt dabei mittels des zweiten Oszillatorsignals s_{OSZ2}. Hierzu ist ein Ausgang der Oszillatorvorrichtung 100 mit einem Eingang der zweiten analogen Eingangsschaltung 300 verbunden.

Zur Erzeugung des ersten Oszillatorsignals s_{OSZ1} und des, vom ersten Oszillatorsignal verschiedenen zweiten Oszillatorsignals s_{OSZ2} weist die Oszillatorvorrichtung 100 eine Teilervorrichtung mit einem ersten Teilerfaktor und einem zweiten Teilerfaktor auf. Der erste Teilerfaktor und der zweite Teilerfaktor sind derart bemessen, dass Oszillatorfrequenzen des ersten Oszillatorsignals s_{OSZ1} derart eingestellt sind, dass das zweite Frequenzband dem Spiegelfrequenzband des ersten Frequenzbands entspricht. Der erste Teilerfaktor und der zweite Teilerfaktor sind zugleich derart bemessen, dass Oszillatorfrequenzen des zweiten Oszillatorsignals s_{OSZ2} derart eingestellt sind, dass das vierte Frequenzband dem Spiegelfrequenzband des dritten Frequenzbands entspricht.

Frequenzbereiche der vier herunter gemischten Empfangssignale L1/E1, GL, E5a/L5 und E5b überlappen sich zur Auswertung dabei überwiegend. Zur Auswertung der Zwischenfrequenzsignale ist eine Auswerteeinrichtung 400 vorgesehen, die hierzu analoge und digitale Schaltungsbestandteile aufweisen kann. Diese Überlappung der Frequenzbereiche der herunter gemischten Empfangssignale L1/E1, GL, E5a/L5 und E5b bewirkt den überraschenden Effekt, dass ein Analogteil und Teile eines Digitalteiles der Empfängerschaltung für verschiedene Empfangssignale L1/E1, GL, E5a/L5, E5b (oder andere) mehrfach genutzt werden können.

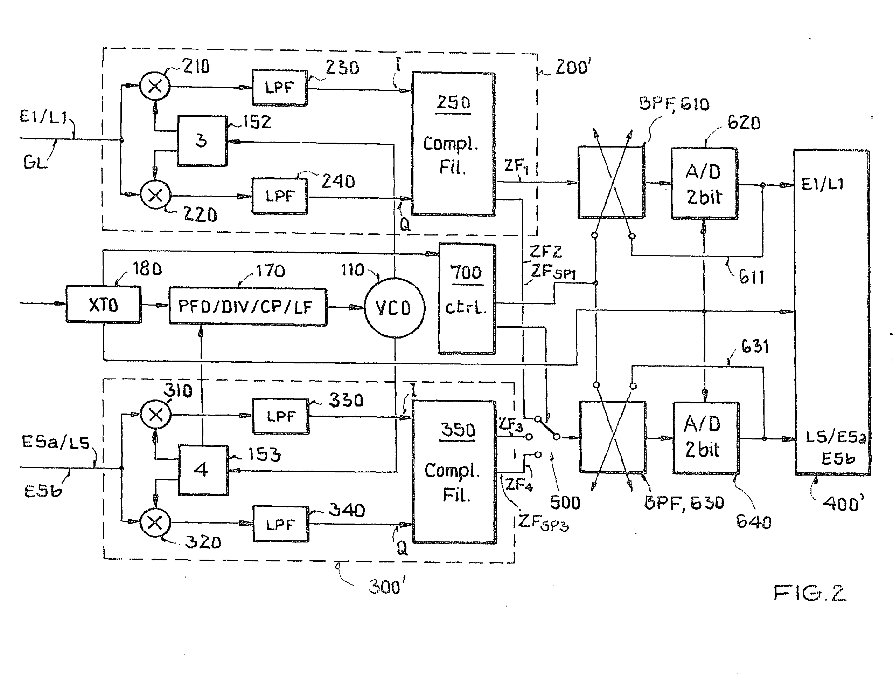

Fig. 2 zeigt ein etwas detaillierteres schematisches Blockschaltbild eines Satellitenempfängerschaltkreises. Dieser weist eine erste analoge Eingangschaltung 200' im Signalpfad der Satellitensignale E1/L1, GL und eine zweite analoge Eingangsschaltung 300' im Signalpfad der Satellitensignale E5a/L5 und E5b auf. Die erste analoge Eingangsschaltung 200' weist zwei Mischer 210, 220 im Eingangsbereich der analogen Eingangsschaltung 200' auf. Die Ausgänge der Mischer 210, 220 sind jeweils mit einem Tiefpassfilter 230, 240 verbunden, um höherfrequente Störsignale auszufiltern. Die gefilterten Signale gelangen als In-Phase-Signal I und als Quadratur-Phase-Signal Q an die Eingänge eines komplexen Filters 250, der an seinen Ausgängen ein erstes Zwischenfrequenzsignal ZF1 und ein zweites Zwischenfrequenzsignal ZF2 ausgibt. Ein Satellitensignal des zweiten Zwischenfrequenzsignals ZF2 ist entsprechend der an den Mischern 210 und 220 anliegenden Frequenz des Oszillatorsignals ein Spiegelfrequenzsignal. Das zweite Zwischenfrequenzsignal ZF2 kann daher auch als Zwischenspiegelfrequenzsignal ZF_{SP1} bezeichnet werden.

Weiterhin weist die zweite analoge Eingangsschaltung 300' zwei Mischer 310, 320 im Eingangsbereich der analogen Eingangsschaltung 300' auf. Die Ausgänge der Mischer 310, 320 sind jeweils mit einem Tiefpassfilter 330, 340 verbunden, um höherfrequente Störsignale auszufiltern. Die gefilterten Signale gelangen als In-Phase-Signal I und als Quadratur-Phase-Signal Q an die Eingänge eines komplexen Filters 350, der an seinen Ausgängen ein drittes Zwischenfrequenzsignal ZF3 und ein viertes Zwischenfrequenzsignal ZF4 ausgibt. Ein Satellitensignal des vierten Zwischenfrequenzsignals ZF4 ist entsprechend der an den Mischern 310 und 320 anliegenden Frequenz des Oszillatorsignals ein Spiegelfrequenzsignal. Das vierte Zwischenfrequenzsignal ZF4 kann daher auch als Zwischenspiegelfrequenzsignal ZF_{SP3} bezeichnet werden. Die zweite analoge Eingangsschaltung 300' ist für den Empfang breitbandigerer Satellitensignale L1/E1, GL als die erste Eingangsschaltung 200' für die schmalbandigeren Satellitensignale E5a/L5, E5b ausgebildet.

Teiler 152 und 153 sind nicht Bestandteile der analogen Eingangsschaltungen 200' bzw. 300', sondern Bestandteile einer Oszillatorvorrichtung, wobei die Oszillatorvorrichtung und die analogen Eingangsschaltungen 200' und 300', auf dem Halbleiterchip zusammen integriert und - wie in Fig. 2 angedeutet - ineinander verschachtelt angeordnet sein können. Die Ausgänge des ersten Teilers 152 sind mit den Mischern 210, 220 der ersten analogen Eingangsschaltung 200' verbunden und geben ein erstes Oszillatorsignal zum Heruntermischen der Satellitensignale E1/L1, GL aus. Die beiden Ausgangssignale an den Ausgängen des ersten Teilers 152 weisen eine Phasenverschiebung von 90° zueinander auf.

Die Ausgänge des zweiten Teilers 153 sind mit den Mischern 310, 320 der ersten analogen Eingangsschaltung 200' verbunden und geben ein zweites Oszillatorsignal zum Heruntermischen der Satellitensignale E5a/L5, E5b aus. Die beiden Ausgangssignale an den Ausgängen des zweiten Teilers 153 weisen eine Phasenverschiebung von 90° zueinander auf. Der erste Teiler weist einen Teilerfaktor von 3 und der zweite Teiler weist einen Teilerfaktor von 4 auf, so dass die Frequenzen des ersten und zweiten Oszillatorsignals ein Verhältnis von 3/4 zueinander aufweisen.

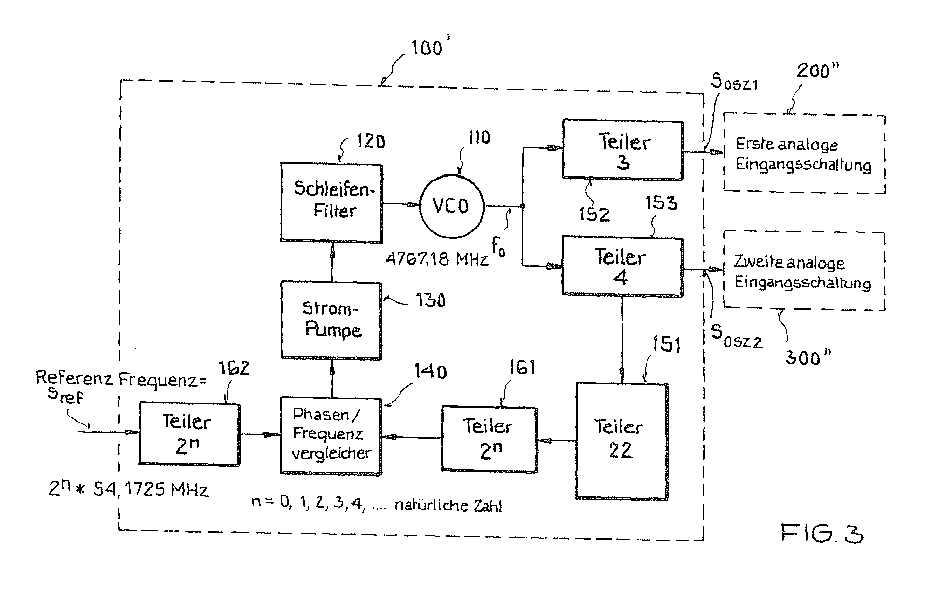

Die Oszillatorvorrichtung des Ausführungsbeispiels der Fig. 2 weist weiterhin einen spannungsgesteuerten Oszillator 110 (VCO: engl. Voltage Controlled Oszillator) eine Schaltung 180 für einen Schwingquarz zur Erzeugung eines Referenzsignals und einen Schaltungsteil 170 zur Bildung einer Phasenregelschleife (PLL) auf. Ein Beispiel einer Oszillatorvorrichtung wird bezüglich der Fig. 3 näher beschrieben.

Im Ausführungsbeispiel der Fig. 2 gelangt das erste Zwischenfrequenzsignal ZF1 über einen ersten einstellbaren Bandpassfilter 610 (BPF) zu einem ersten Analog-Digital-Umsetzer 620 (A/D), der im Ausführungsbeispiel der Fig. 2 eine Auflösung von 2 Bit aufweist. Der erste Bandpassfilter 610 ist bzgl. seiner Transferfunktion einstellbar ausgebildet. Auch eine Verstärkung durch den ersten Bandpassfilter 610 ist einstellbar. Im Ausführungsbeispiel der Fig. 2 ist eine Rückführung 611 für eine automatische Verstärkungseinstellung (AGC: engl. Automatic Gain Control) vorgesehen.

Der zweite Ausgang des ersten komplexen Filters 250 und beide Ausgänge des zweiten komplexen Filters 350 sind mit Eingängen eines Schalters 500 verbunden, so dass zwischen dem zweiten Zwischenfrequenzsignal ZF2, dem dritten Zwischenfrequenzsignal ZF3 und dem vierten Zwischenfrequenzsignal ZF4 mittels des Schalters 500 ausgewählt werden kann. Der Ausgang des Schalters 500 ist mit einem zweiten einstellbaren Bandpassfilter 630 verbunden, wobei der zweite Bandpassfilter 630 bzgl. seiner Eckfrequenzen als auch bzgl. einer Verstärkung einstellbar ausgebildet ist. Im Ausführungsbeispiel der Fig. 2 ist eine zweite Rückführung 631 für eine automatische Verstärkungseinstellung (AGC: engl. Automatic Gain Control) vorgesehen.

Dem Schalter 500 und dem zweiten Bandpassfilter 630 ist ein zweiter Analog-Digital-Umsetzer 640 mit einer Auflösung von 2 Bit im Signalpfad nachgeschaltet. Die Ausgänge der beiden Analog-Digital-Umsetzer 620 und 640 sind mit digitalen Eingängen einer digitalen Auswerteschaltung 400' verbunden. Die digitale Auswerteschaltung 400' ist zur Dekodierung der gespreizten Satellitensignale ausgebildet. Die digitale Auswerteschaltung weist hierzu einen Korrelator zur Ausführung einer Korrelation (CDMA) auf.

Weiterhin weist der Satellitenempfängerschaltkreis des Ausführungsbeispiels der Fig. 2 eine Steuereinrichtung 700 (ctrl) auf, die die Schalterstellung des Schalters 500 und die Transferfunktion des ersten Bandpassfilters 610 und/oder die Transferfunktion des zweiten Bandpassfilters 630 zur Einstellung steuert. Vorteilhafterweise ist die Steuereinrichtung 700 zur von der Schalterstellung des Schalters 700 abhängigen Steuerung der Transferfunktion des zweiten Bandpassfilters 630 ausgebildet und eingerichtet. Das Referenzsignal das mittels der Schaltung 180 und einem Schwingquarz erzeugt wird, kann vorteilhaft in Synergie als Vergleichsnormal und zur Taktung der Steuereinrichtung 700 und/oder der Analog-Digital-Umsetzer 620, 640 und/oder der Auswerteschaltung 400' verwendet werden.

Das Ausführungsbeispiel der Fig. 2 bewirkt daher den überraschenden Effekt, dass zwei Oszillatorsignale S_{OSZ1} und S_{OSZ2} generiert werden, die durch ganzzahlige Teiler 152, 153, 170 aus einer einzelnen Frequenz fo eines Referenzsignals s_{ref} erzeugbar sind und die Eigenschaften haben, dass für die erste analoge Eingangsschaltung 200' das Glonass GL Eingangssignalfrequenzband das Spiegelfrequenzband des E1 / L1 Frequenzbandes ist und dass für die zweite analoge Eingangsschaltung das E5b Eingangssignalfrequenzband das Spiegelfrequenzband des E5a Eingangsignalfrequenzbandes ist.

In Fig. 3 ist eine Oszillatorvorrichtung 100' als schematisches Blockschaltbild dargestellt. Die Oszillatorvorrichtung 100' erzeugt ein erstes Oszillatorsignal s_{OSZ1} und ein zweites Oszillatorsignals s_{OSZ2} zur Ausgabe an die analogen Eingangsschaltungen 200" und 300" (bzw. 200, 300 oder 200', 300').

Die Oszillatorvorrichtung 100' des Ausführungsbeispiels der Fig. 3 weist einen ersten Teiler 151 mit dem Teilungsfaktor zweiundzwanzig einen zweiten Teiler 152 mit dem Teilungsfaktor drei, einen dritten Teiler 153 mit dem Teilungsfaktor vier und einen spannungsgesteuerten Oszillator 110 mit einer eingeregelten Oszillatorfrequenz f₀ von 4767,18 MHz auf. In anderen Ausführungsbeispielen ist die eingeregelte Oszillatorfrequenz des spannungsgesteuerten Oszillators 110 zwischen 4747,6 MHz und 4774,352 MHz. Die eingeregelte Oszillatorfrequenz f₀ des spannungsgesteuerten Oszillators 110 bezieht sich dabei auf eine Referenzfrequenz eines Referenzsignals s_{ref}, wobei die Referenzfrequenz 54,1725 MHz für die eingeregelten Oszillatorfrequenz f₀ von 4767,18 MHz beträgt. In anderen Ausführungsvarianten ist die Referenzfrequenz in einem Bereich zwischen 53,95 MHz und 54,254 MHz ausgebildet.

Die Oszillatorvorrichtung 100' weist eine Phasenregelschleife mit dem spannungsgesteuerten Oszillator 110, dem ersten Teiler 151 mit dem Teilungsfaktor zweiundzwanzig, dem dritten Teiler 153 mit dem Teilungsfaktor vier, einen weiteren optionalen Teiler 161, einem Phasen/Frequenzvergleicher 140, einer Strompumpe 130 und einem Schleifenfilter 120 auf. Auch ist es möglich ein ganzzahliges Vielfaches der Referenzfrequenz zu nutzen, wobei hierfür die Teiler 162 und 161 für eine Teilung durch den Faktor 2ⁿ vorgesehen sind. Dabei ist n eine natürliche Zahl (0, 1, 2, 3, 4, usw.).

In Fig. 4 ist eine einfache Ausführung eines komplexen Spiegelfrequenzunterdrückungsfilters 250', 350' (Polyphasenfilter) schematisch dargestellt. Der Filter 250', 350' weist für ein In-Phase-Signal I und ein Quadratur-Phase-Signal Q an seinen Eingängen zwei Phasenschieber 251, 252 für ein Schieben der Phase um 90° auf. Die Phasenschieber 251, 252 können beispielsweise als RC-Schaltungen mit Widerständen und Kapazitäten ausgebildet sein. Den Phasenschiebern 251, 252 sind Subtrahierer 253, 254 nachgeschaltet, die an den Ausgängen Zwischenfrequenzsignale ZF und ZF_{SP} ausgeben.

Das Zwischenfrequenzsignal ZF wird durch Heruntermischen und komplexes Filtern eines ersten Empfangssignals gewonnen, das in einem ersten Frequenzband empfangbar ist. Das Zwischenfrequenzsignal ZF_{SP} wird durch Heruntermischen und komplexes Filtern eines zweiten Empfangssignals gewonnen, das in einem zweiten Frequenzband empfangbar ist. Das zweite Frequenzband entspricht dabei dem Spiegelfrequenzband des ersten Frequenzbands. Mischer und das Polyphasenfilter 250', 350' bewirken vorzugsweise einen Image-Rejection-Effekt für das jeweils andere Signal. Diese überraschende Effekt wird durch eine Änderung der Phasenbeziehung im Polyphasenfilter 250', 350' des Ausführungsbeispiels der Fig. 4 erzielt.

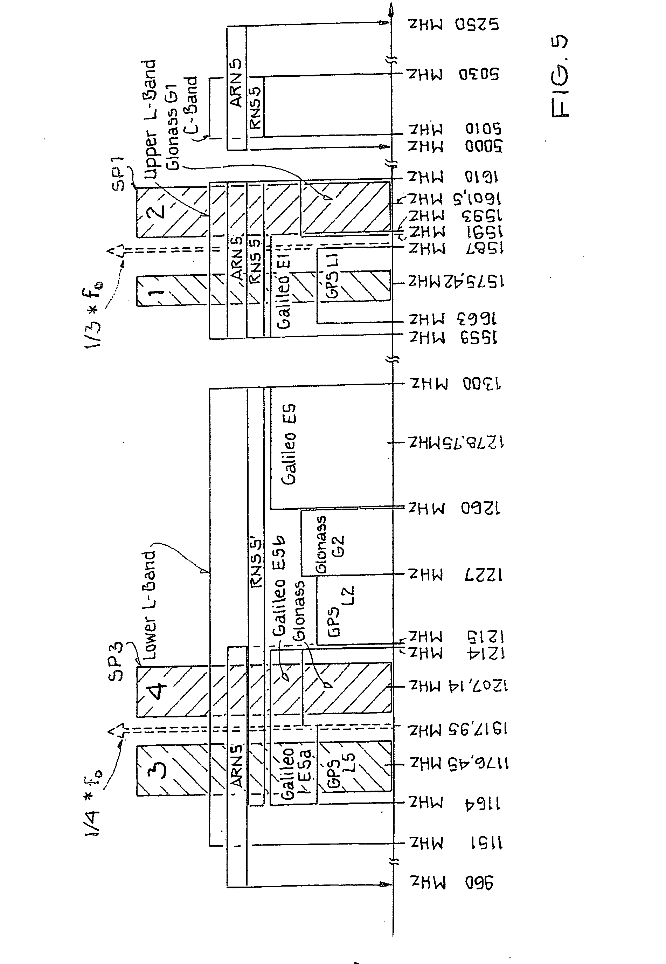

In Fig. 5 sind Frequenzbänder schematisch dargestellt. Die Oszillatorfrequenzen des ersten und zweiten Oszillatorsignals sind als strichlinierte Pfeile hervorgehoben, wobei eine Oszillatorfrequenz des ersten Oszillatorsignals 1/3 mal der Frequenz f₀ des spannungsgesteuerten Oszillators und eine Oszillatorfrequenz des zweiten Oszillatorsignals 1/4 mal der Frequenz f₀ des spannungsgesteuerten Oszillators beträgt. Dargestellt ist ein erstes Satellitensignalfrequenzband 1 für ein erstes Satellitensignal E1/L1, das auf ein erstes Zwischenfrequenzsignal (ZF1) heruntergemischt wird. Weiterhin ist dargestellt ein zweites Satellitensignalfrequenzband 2 für ein zweites Satellitensignal Glonass G1, das auf ein zweites Zwischenfrequenzsignal (ZF2) heruntergemischt wird. Das zweite Satellitensignalfrequenzband 2 entspricht der Spiegelfrequenz SP1 des ersten Satellitensignalfrequenzbands 1 aufgrund der Ausbildung des Oszillatorsignals mit der Oszillatorfrequenz 1/3*f₀ in etwa in der Mitte zwischen dem ersten Satellitensignalfrequenzband 1 und dem zweiten Satellitensignalfrequenzband 2.

Dargestellt ist ein drittes Satellitensignalfrequenzband 3 für ein drittes Satellitensignal E5a/L5, das auf ein drittes Zwischenfrequenzsignal (ZF3) heruntergemischt wird. Weiterhin ist dargestellt ein viertes Satellitensignalfrequenzband 4 für ein viertes Satellitensignal E5b, das auf ein viertes Zwischenfrequenzsignal (ZF4) heruntergemischt wird. Das vierte Satellitensignalfrequenzband 4 entspricht der Spiegelfrequenz SP3 des dritten Satellitensignalfrequenzbands 3 aufgrund der Ausbildung des Oszillatorsignals mit der Oszillatorfrequenz 1/4*f₀ in etwa in der Mitte zwischen dem dritten Satellitensignalfrequenzband 3 und dem vierten Satellitensignalfrequenzband 4. Die Satellitensignalfrequenzbänder 1, 2, 3, 4 weisen dabei eine unterschiedliche Bandbreite auf.

Die Erfindung ist nicht auf die dargestellten Ausgestaltungsvarianten der Figuren 1 bis 5 beschränkt. Beispielsweise ist es möglich andere analoge Eingangsschaltungen zum Heruntermischen zu verwenden. Auch ist es beispielsweise möglich anstelle von analogen komplexen Filtern digitale komplexe Filter vorzusehen.

Bezugszeichenliste
- 100, 100': Oszillatorvorrichtung
- 110: spannungsgesteuerter Oszillator
- 120: Schleifenfilter
- 130: Strom-Pumpe
- 140: Phasen-/ Frequenzvergleicher
- 151, 152, 153, 161, 162: Teiler
- 170, 180: Oszillatorteilschaltung
- 200, 200', 200", 300, 300', 300": analoge Eingangsschaltung
- 210,220,310,320: Mischer
- 230, 240, 330, 340: Tiefpassfilter
- 250, 350, 250', 350': komplexer Filter
- 251,252: Phasenschieber
- 253, 254: Subtrahierer
- 400,400': Auswerteschaltung
- 500: Schalter, Multiplexer
- 610,630: Bandpassfilter
- 620, 640: Analog-Digital-Umsetzer
- 700: Steuereinrichtung
- ZF, ZF_{SP}, ZF_{SP1}, ZF_{SP3}, ZF1, ZF2, ZF3, ZF4: Zwischenfrequenzsignal
- SP1, SP3: Spiegelfrequenz
- f₀: Oszillatorfrequenz des VCO
- I: In-Phase-Signal
- Q: Quadratur-Phase-Signal
- n: natürliche Zahl
- s_{OSZ1}, s_{OSZ2}: Oszillatorsignal
- s_{ref}: Referenzsignal
- GL, E1, L1, E5a, L5, E5b: Satellitennavigationssignale

## Patentansprüche

1. Satellitenempfängerschaltkreis zum Empfang von Satellitennavigationssignalen unterschiedlicher Satellitensysteme,
- mit einer Oszillatorschaltung (100) mit einer Teilervorrichtung zur Erzeugung eines ersten Oszillatorsignals aus einem Referenzsignal durch einen ersten Teilerfaktor und zur Erzeugung eines zweiten Oszillatorsignals aus dem Referenzsignal durch einen zweiten Teilerfaktor,
- mit einer ersten analogen Eingangsschaltung (200), die
zum Heruntermischen von zumindest einem ersten Empfangssignal mit einem ersten Frequenzband auf ein erstes Zwischenfrequenzsignal und zum Heruntermischen von zumindest einem zweiten Empfangssignal mit einem zweiten Frequenzband, das dem Spiegelfrequenzband des ersten Frequenzbands entspricht, auf ein zweites Zwischenfrequenzsignal
mittels des ersten Oszillatorsignals ausgebildet ist,
- mit einer zweiten analogen Eingangsschaltung (300), die
zum Heruntermischen von zumindest einem dritten Empfangssignal mit einem dritten Frequenzband auf ein drittes Zwischenfrequenzsignal und zum Heruntermischen von zumindest einem vierten Empfangssignal mit einem vierten Frequenzband, das dem Spiegelfrequenzband des dritten Frequenzbands entspricht, auf ein viertes Zwischenfrequenzsignal
mittels des zweiten Oszillatorsignals ausgebildet ist,
- bei dem der erste Teilerfaktor und der zweite Teilerfaktor derart bemessen sind, dass Frequenzbereiche des zweiten Zwischenfrequenzsignals und des dritten Zwischenfrequenzsignal und des vierten Zwischenfrequenzsignals sich zur Auswertung zumindest teilweise überlappen.

2. Satellitenempfängerschaltkreis nach Anspruch 1, bei dem die Teilervorrichtung eine Anzahl von ausschließlich ganzzahligen Teilern aufweist.

3. Satellitenempfängerschaltkreis nach einem der Ansprüche 1 oder 2,
- bei dem die Oszillatorvorrichtung eine Phasenregelschleife (PLL) mit einem ersten Teiler der Teilervorrichtung aufweist,
- bei dem die Oszillatorvorrichtung einen zweiten Teiler der Teilervorrichtung aufweist, der mit dem Ausgang der Phasenregelschleife (PLL) und der ersten analogen Eingangsschaltung verbunden ist, und
- bei dem die Oszillatorvorrichtung einen dritten Teiler der Teilervorrichtung aufweist, der mit dem Ausgang der Phasenregelschleife (PLL) und der zweiten analogen Eingangsschaltung verbunden ist.

4. Satellitenempfängerschaltkreis nach Anspruch 3,
- bei dem der erste Teiler zur Teilung durch zweiundzwanzig oder einem ganzzahligem Vielfachen von zweiundzwanzig - vorzugsweise einem 2ⁿ-fachen von zweiundzwanzig mit n als Element der natürlichen Zahlen - ausgebildet ist,
- bei dem der zweite Teiler zur Teilung durch drei ausgebildet ist, und
- bei dem der dritte Teiler zur Teilung durch vier ausgebildet ist.

5. Satellitenempfängerschaltkreis nach einem der vorhergehenden Ansprüche, bei dem das Referenzsignal eine Referenzfrequenz in einem Bereich von 53,95 MHz bis 54,254 MHz - insbesondere eine Referenzfrequenz von 54,1725 MHz - oder einem ganzzahligem Vielfachen von 53,95 MHz bis 54,254 MHz - vorzugsweise einem 2ⁿ-fachen von 53,95 MHz bis 54,254 MHz mit n als Element der natürlichen Zahlen - aufweist.

6. Satellitenempfängerschaltkreis nach einem der vorhergehenden Ansprüche, bei dem eine Referenzfrequenz des Referenzsignals und/oder der erste Teilerfaktor und der zweite Teilerfaktor derart ausgebildet sind, dass das erste Empfangssignal, das zweite Empfangssignal, das dritte Empfangssignal und das vierte Empfangssignal zwischen den Oberwellen des Referenzsignals sind.

7. Satellitenempfängerschaltkreis nach einem der vorhergehenden Ansprüche,
- bei dem die erste Eingangsschaltung einen ersten analogen Mischer aufweist, der mit einem Ausgang der Oszillatorschaltung, insbesondere mit dem Ausgang des zweiten Teilers, verbunden ist, und
- bei dem die zweite Eingangsschaltung einen zweiten analogen Mischer aufweist, der mit einem Ausgang der Oszillatorschaltung, insbesondere mit dem Ausgang des dritten Teilers, verbunden ist.

8. Satellitenempfängerschaltkreis nach einem der vorhergehenden Ansprüche,
- mit einem ersten Analog-Digital-Umsetzer, der einem das erste Zwischenfrequenzsignal ausgebenden Ausgang eines ersten analogen Filters der ersten analogen Eingangsschaltung nachgeschaltet ist,
- mit einem zweiten Analog-Digital-Umsetzer, der einem Umschalter nachgeschaltet ist,
- bei dem Eingänge des Umschalters
mit einem Ausgang des ersten analogen Filters der ersten analogen Eingangsschaltung zur Ausgabe des zweiten Zwischenfrequenzsignals und/oder
mit einem Ausgang eines zweiten analogen Filters der zweiten analogen Eingangsschaltung zur Ausgabe des dritten Zwischenfrequenzsignals und/oder
mit einem Ausgang des zweiten analogen Filters der zweiten analogen Eingangsschaltung zur Ausgabe des vierten Zwischenfrequenzsignals
verbunden sind.

9. Satellitenempfängerschaltkreis nach Anspruch 8, bei dem die erste analoge Eingangsschaltung und die zweite analoge Eingangsschaltung und der erste Analog-Digital-Umsetzer und der zweite Analog-Digital-Umsetzer zur gleichzeitigen Auswertung
- des ersten Zwischenfrequenzsignals
und
- eines Signals aus dem zweiten Zwischenfrequenzsignal oder dem dritten Zwischenfrequenzsignal oder dem vierten Zwischenfrequenzsignal
ausgebildet und eingerichtet sind.

10. Satellitenempfängerschaltkreis nach einem der Ansprüche 8 oder 9, mit einem einstellbaren Bandpassfilter, der zwischen dem Schalter und dem zweiten Analog-Digital-Umsetzer geschaltet ist, und mit einer Steuereinrichtung, die zum Einstellen der Transferfunktion des Bandpassfilters - insbesondere in Abhängigkeit von einer Schalterstellung des Schalters - ausgebildet ist.

11. Satellitenempfängerschaltkreis nach einem der vorhergehenden Ansprüche, der zur Auswertung ausgebildet ist das erste Empfangssignal und/oder das zweite Empfangssignal und/oder das dritte Empfangssignal und/oder das vierte Empfangssignal mittels eines Spreizkodes (CDMA) zu dekodieren.

12. Verfahren zum Empfang von Satellitennavigationssignalen,
- bei dem aus einem Referenzsignal ein erstes Oszillatorsignal mittels eines ersten Teilerfaktors und ein zweites Oszillatorsignal mittels eines zweiten Teilerfaktors erzeugt wird,
- bei dem ein erstes Empfangssignal in einem ersten Frequenzband auf ein erstes Zwischenfrequenzsignal heruntergemischt wird,
- bei dem ein zweites Empfangssignal in einem zweiten Frequenzband auf ein zweites Zwischenfrequenzsignal heruntergemischt wird, wobei das zweite Frequenzband dem Spiegelfrequenzband des ersten Frequenzbands entspricht,
- bei dem ein drittes Empfangssignal in einem dritten Frequenzband auf ein drittes Zwischenfrequenzsignal heruntergemischt wird,
- bei dem ein viertes Empfangssignal in einem vierten Frequenzband auf ein viertes Zwischenfrequenzsignal heruntergemischt wird, wobei das vierte Frequenzband dem Spiegelfrequenzband des dritten Frequenzbands entspricht,
- bei dem der erste Teilerfaktor und der zweite Teilerfaktor derart eingestellt werden, dass Frequenzbereiche des zweiten Zwischenfrequenzsignals und des dritten Zwischenfrequenzsignals und des vierten Zwischenfrequenzsignals sich zur Auswertung zumindest teilweise überlappen.

13. Verwendung einer Oszillatorvorrichtung mit ganzzahligen Teilerfaktoren zur Teilung eines Referenzsignals zur Erzeugung eines ersten Oszillatorsignals für einen ersten Mischer und eines zweiten Oszillatorsignals für einen zweiten Mischer zum Heruntermischen von Satellitennavigationssignalen von auf unterschiedlichen Frequenzen sendenden Satelliten unterschiedlicher Satellitennavigationssysteme.
